(19) Europäisches Patentamt / European Patent Office / Office européen des brevets

(11) **EP 1 967 063 A1**

(12) **EUROPEAN PATENT APPLICATION**
published in accordance with Art. 158(3) EPC

(43) Date of publication:
**10.09.2008 Bulletin 2008/37**

(51) Int Cl.:
***A01K 1/015*** (2006.01)

(21) Application number: **06843041.2**

(22) Date of filing: **22.12.2006**

(86) International application number:
**PCT/JP2006/325582**

(87) International publication number:
**WO 2007/077756 (12.07.2007 Gazette 2007/28)**

(84) Designated Contracting States:
**DE FR GB**

(30) Priority: **27.12.2005 JP 2005375424**

(71) Applicant: **Kao Corporation
Chuo-ku
Tokyo 103-8210 (JP)**

(72) Inventors:
• **TSUTSUMI, Yasuki
  Tokyo 131-0044 (JP)**
• **OTSUJI, Kazuya
  Tokyo 131-0044 (JP)**

(74) Representative: **Vossius & Partner
Siebertstrasse 4
81675 München (DE)**

(54) **MATERIAL FOR TREATING PET ANIMAL EXCRETE**

(57) An excreta treating material 4 of the invention contains a ground material of plant origin and an inorganic powder self-disintegrates upon water absorption. A pet toilet 1 of the invention includes a toilet box partitioned with a drainboard into upper and lower compartments. An excreta treating material 4 containing a ground material of plant origin and an inorganic powder and capable of self-disintegrating on water absorption is put in the upper compartment, and the lower compartment has a tray 5. The inorganic powder is preferably zeolite. The particles of the ground material of plant origin in the excreta treating material 4 are preferably bound together only by a force.

EP 1 967 063 A1

## Description

Technical Field

The present invention relates to a pet excreta treating materials used to treat the excreta from pets, particularly cats and dogs, and a pet toilet system containing the same.

Background Art

Known pet toilets for treating the excreta of pets such as cats and dogs include those disclosed in Patent Document 1 to 3, in which a toilet box is partitioned into upper and lower compartments by a foraminous member (drainboard), with an excreta treating material put in the upper compartment and a urine absorbent member made of an absorbent polymer, plant fiber, pulp, and the like set in the lower compartment. These pet toilet systems are designed to allow urine discharged by a pet to quickly pass the excreta treating material placed in the upper compartment, drop through the drain holes of the drainboard, be positively absorbed by a urine absorbent member, such as a urine absorbing mat, laid in the lower compartment. The excreta treating materials proposed are characterized by their non-disintegrability even after absorbing some urine and thereby generation of bad odor. However, the non-disintegrability of the material can cause difficulty for a user to know when to replace the material. In addition, the system involves placement of a urine absorbent member under the drainboard, which, of necessity, increases the cost, garbage, and a bother to replace.

Patent Document 4 proposes cat litter obtained by heat compressing a ground material comprising softwood sawdust into pellets that self-disintegrate upon water absorption. This technique is characterized, in contrast to the above-described toilet systems, by allowing the used litter to drop through a drainboard so that a user clearly knows when to refill a litter box. However, the litter has a low absorption capacity and a low degree of disintegration upon water absorption. When a large amount of urine is discharged at a time, the unabsorbed portion of the urine runs through the drainboard. It follows that urine pools in the container under the drainboard and gives off an bad odor, or the litter having absorbed urine fails to self-disintegrate and remains on the drainboard to give off a bad odor. Thus, the litter cannot be regarded as satisfactory.

Patent Document 1:JP 7-67489A

Patent Document 2:US 2003/0116095A1

Document 3:US 6578520B2

Patent Document 4:JP 9-308403A

Disclosure of the Invention

The pet excreta treating material contemplated with the present invention has to satisfy conflicting requirements: to have shape retention enough not to disintegrate by some outer force, and to absorb water easily and self-disintegrate easily. As a result of extensive investigations on these requirements, they have found that an excreta treating material formed out of a ground material of plant origin combined with inorganic powder achieves high water absorption good disintegrability after water absorption. The inventors have ascertained that the excreta treating material provides a satisfactory toilet system for pets. When the excreta treating material is used as a litter in a toilet system having a litter housing with a perforated bottom (drainboard) and a tray under the bottom of the litter housing, it does not allow urine to fall therethrough owing to its high absorptivity and, after urine absorption, easily self-disintegrates and drops under the drainboard, thereby preventing urine from remaining on the drainboard and emitting a bad odor. The above-described problems are thus settled down by the present invention.

The invention provides a pet excreta treating material that contains a ground material of plant origin and an inorganic powder self-disintegrates upon absorbing water. The invention also provides a pet toilet system having a toilet box, a drainboard partitioning the toilet box into upper and lower compartments, an excreta treating material in the compartment, and a tray in the lower compartment, the excreta treating material is the above-described one.

Brief Description of the Drawings

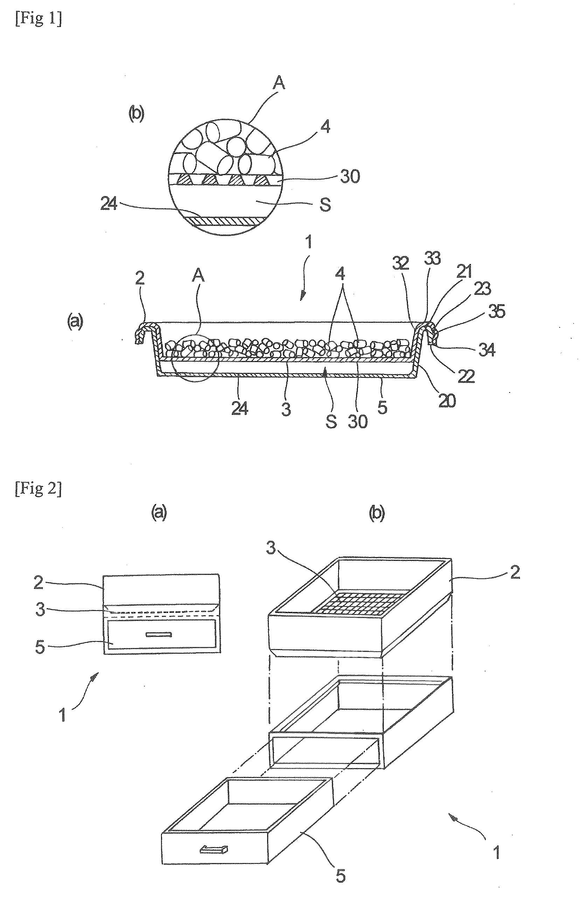

[Fig. 1 Fin. 1 schematically illustrates an embodiment of the pet excreta treating material of the invention and the of its use, in which Fig. 1 (a) is a cross-section of a toilet used, and Fig. 1(b) is a fragmentary enlarged view of Fig. 1(a). [Fig. 2] Tig. 2 illustrates another form of a toilet system in which the pet excreta treating material of the Invention is used, in which Fig. 2(a) is a front view, and Fig. 2(b) is an exploded perspective view.

Detained Description of the Invention

The present invention relates to an excreta treating material that reduces in amount because it self-disintegrates upon water absorption and drops through the drainboard thereby clearly telling a user when to refill and has improved water absorption and self-disintegrability water absorption (hereinafter simply referred to as disintegrability) thereby being prevented from giving off a bad odor. The present invention also relates to a pet toilet system that uses the excreta treating material, needs no separate urine absorbent member, and gives off no bad odor.

The pet excreta treating material (hereinafter simply referred to as excreta treating materials) of the present invention will be described first based on its preferred embodiment.
The excreta material 4 of the present embodiment contains a ground material of plant origin and an inorganic powder. As used herein, the term "ground material" is intended to widely include materials obtained by mechanically grinding plants such as sawdust and grinding. The excreta treating material 4 is preferably pellets formed by compressing a mixture of the components. The preferably have a columnar with a diameter of about 5 to 7 mm and a height slightly larger the diameter, e.g., about 3 to 15 mm, as shown in Fig. 1(b).

The excreta material 4 may be used as a litter spread in a shallow tray or the like. It is preferably used in a pet toilet 1 having a toilet box partitioned with a drainboard 3 into an upper compartment and a lower compartment having a tray 5, in which case the material 4 is spread in the upper compartment as illustrated in Fig. 1.

Materials constituting the excreta treating material 4 will be described. The material of plant origin, one of the materials constituting the excreta treating material 4, may be either a herbaceous or a woody plant. Examples of the ground material of such plant origin include ground woody plants (wood and bark), seed oil cake, ground hull of cereal grains, and ground herbaceous plants. It is particularly preferred to use ground chips of woody plants, especially softwood such as cedar, pine, and cypress for their moldability and deodorizing performance owing to their deodorizing components such as phenol or terpene substances. The ground materials of plant origin may be used either individually or as a combination of two or more thereof.

It is preferred that the ground material of plant origin is present in the excreta treating material 4 in a proportion of 70% to 99.9% (by mass, hereinafter the same), more preferably 85% to 99%, even more preferably 92% to 98%, in terms of shape retention before use and disintegrability after water absorption.

Examples of the inorganic powder, another component constituting the excreta treating material 4, include bentonite, silica, talc, titanium oxide, calcium carbonate, calcium hydroxide, calcium oxide, white carbon, diatomaceous earth, siliceous white clay, kaolin, zeolite, and sepiolite. Zeolite is preferred to provide a molded product with good shape retention before use and good disintegrability after waster absorption. The powders described can be used either individually or as a combination of two or more thereof.

The inorganic powder is preferably present in the excreta treating material 4 in a proportion of 0.1% to 30%, more preferably 1% to 15%, even preferably 2% to 8%, in terms of shape retention before use disintegrability after water absorption.

If desired, the excreta treating material 4 may contain an antimicrobial agent, a colourant, and the like in addition to the above described components. Each of these additive components is preferably used in an amount of 0.01% to 0.5% based on the excreta treating material 4. Examples of useful antimicrobial agents include sodium benzoate, sorbic acid, potassium sorbate, didecylmethylammoniums, benzalkonium chloride, polyphenols, silver, and copper.

The excreta treating material 4 is preferably produced as follows. A ground material of plant origin and an inorganic powder are thoroughly mixed at a prescribed ratio. The particle size of the ground material is preferably about 0.01 to 5 mm, more preferably about 0.02 to 2 mm, in terms of uniformity of fixing, moldability, disintegrability after water absorption, and deodorizing performance. The particle size of the inorganic powder is preferably about 0.01 to 0.5 mm, more preferably about 0.1 to 0.3 mm, in terms of uniformity of mixing, moldability, and disintegrability after water absorption.

The mixture containing the ground material of plant origin the inorganic powder is molded into pellets by of a compression extruder. A preferred compression extruder is a high pressure extruder including a die having die holes and a pressing roller in contact with the die for pressing the mixture through the holes. Such a high pressure extruder is exemplified by a Sprout pelletizer. By using the high extruder such as a Sprout pelletizer, it is possible to press the mixture into the die holes under a high pressure, which permits the die holes to have a large length (depth), and to sufficiently the resistance the inner wall of the die holes. As a result, the mixture is by the high extrusion resistance to produce pellets having high retention before use. It is preferred that the resulting are porous to secure detention before use, water absorption, and disintegrability after absorption. Specifically, the excreta treating maternal 4 preferably has a specific gravity of 0.5 to 1.8, more preferably 0.8 to 1.5, even more preferably 1 to 1.3. The excreta treating material 4 which is porous can be produced using the aforementioned materials in accordance with the aforementioned process.

The thus obtained excreta treating maternal 4 has the particles of the ground material of plant origin bound together not by the aid of a binder or the like but only by the pressing force. Therefore, the material 4 loses the binding force between the particles on absorbing water and swells and disintegrates easily.

The water absorption and disintegrability after water absorption of the excreta treating material 4 thus obtained are evaluated in terms of water absorbency and dusting ratio measured in accordance with the methods described below. To obtain high performance in leakage prevention, deodorization, and disintegration after water absorption, it is preferred that the water absorbency is 15% or higher, more preferably 20% or higher. To obtain high performance in deodorization and disintegration after water absorption, it is preferred that the dusting ratio is 20% or more, more preferably 30% or more.

Method of absorbency measurement

The excreta treating maternal 4 weighing $70 \pm 1$ g is put in an 80 mm diameter, 100 mm high cylinder with a net bottom (mesh size: 2.8 mm). The cylinder and contents are immersed in water at 25°C $\pm 3$°C for 3 seconds. After the cylinder is taken out of water, water adhered to the cylinder is wiped up with an absorbent sheet (Kim Trowel, a trade name, available from CRECIA; basis weight: 30 $g/m^2$). The contents are transferred into a cylindrical container and weighed to obtain the mass of the excreta material 4. A water absorbency (%) of the excreta treating material is calculated from the thus measured mass of the excreta treating maternal 4 after immersion and the mass of the treating material 4 before immersion according to formula:

$$\text{Water absorbency (\%)} = [(\text{mass of excreta treating material after immersion} - \text{mass of excreta treating material before immersion})/(\text{mass of excreta treating material before immersion})] \times 100$$

Method of dusting ratio measurement

The above excreta treating material is then transferred to another cylinder having the same size as the above cylinder. The transfer of the contents between the two cylinders is repeated 50 times in total. The particles generated as a result of the repetition of transfer operation is collected and weighed. The mass (g) of the collected particles is divided by the mass of the excreta treating material before immersion, and the quotient is multiplied by 100 to give a dusting ratio (%) of the excreta treating material.

The toilet for pets according to the present invention that uses the excreta treating material of the present invention will then be described based on its embodiment. Fig. 1 illustrates one embodiment of the pet toilet of the invention. In Fig. 1 (a), numeral 1 indicates a pet toilet.

As illustrated in Fig. 1(a), the pet toilet 1 has a toilet box partitioned by a drainboard 3 into upper and lower compartments. The upper compartment constitutes an excreta treating material 4 housing 2, and the lower compartment constitutes a tray 5.

The tray 5 has a flange 21 along the top edge of its walls 20. The flange 21 has a downward extending lip 22. The lip 22 has a projection 23 on its outer periphery, the projection 23 being to fit into a recess 35 (described below) of the excreta treating material 4 housing 2 to achieve snap fit engagement. The wall 20 has a height of 120 to 240 mm, which is sufficient for indoor use. The shape of the tray 5 is not particularly limited and may be rectangular, circular, oval, etc. The area of the bottom 24 of the tray 5 is, but not limited to, 800 to 1600 $cm^2$, which is sufficient for indoor use.

The excreta treating material 4 housing 2 has the shape of a tray with its bottom 30 being formed of a drainboard 3. The excreta treating material 4 housing 2 has a flange 33 along the top edge of its wall 32. The flange 33 has a downward lip 34. The lip 34 has a recess 35 on its inner periphery, the recess 35 being to receive the projection 23 of the tray 2 to achieve snap fit engagement.

The pet toilet 1 of the present embodiment is configured to secure a space S below the bottom 30 of the excreta treating material housing 2, with the excreta treating material 4 housing 2 fitted on the upper side of the tray 5.

In order to prevent the excreta treating material 4 having self-disintegrated after absorption and dropped on the tray 5 from banking to close the drain holes of the drainboard 3 and from scattering widely, the height of the space S is preferably 10 mm or more, more preferably 20 mm or more, and preferably 70 mm or less, more preferably 50 mm or less, even more preferably 30 mm or less.

The tray 5 and the excreta treating material 4 housing 2 can be of any anticorrosive material. Each of them is preferably produced by integrally molding a general-purpose synthetic resin such as polypropylene, polyethylene, polyethylene terephthalate, vinyl chloride, and ABS, in view of light weight, ease of handling, and good moldability, and so on. The tray 5 and the excreta treating material 4 housing 2 are preferably provided with a water-repellent finish and an antimicrobial finish.

Fig. 2 is a view of a embodiment of the pet toilet according to the present invention. In the second embodiment, the tray 5 is drawer-like so that the excreta treating material in the tray 5 is easier to be disposed of.

Example

The present invention will now be illustrated in greater detail with reference to Example and Comparative Example, but it should be understood that the invention is not limited thereto.

Example 1

Ninety-Eve parts (by mass, hereinafter the same) of sawdust of Japanese larch and five parts of zeolite were mixed thoroughly and molded in a Sprout pelletizer into columnar pellets of 6.5 mm in diameter and 3 to 10 mm in height (excreta treating material). The water absorbency and dusting ratio of the excreta treating material obtained were as shown in Table 1 below.

Comparative Example 1

Sawdust of Japanese larch was molded in a Sprout pelletizer in accordance with the conventional technique disclosed in Patent Document 1 to obtain an excreta treating material in the form of columnar pellets of 6.5 in diameter and 3 to 10 mm in height. The water absorbency and dusting ratio of the excreta treating material obtained were as shown in Table 1.

The treating materials prepared in Example and Comparative Example were evaluated by an absorbency and a ratio. The results obtained are shown in Table 1.

Table 1

|  | Example 1 | Comparative Example 1 |
|---|---|---|
| Absorbency (%) | 30.3 | 12.2 |
| Dusting Ratio (%) | 46.8 | 17.2 |

The results in Table 1 prove that the excreta treating material of the present invention achieves higher absorbency and dusting ratio than the conventional one.

Industrial Applicability

As can be understood from the above description, the pet excreta treating material of the present invention not only exhibits high urine absorption but easily self-disintegrates to clearly tell a user when to refill a litter box. A pet toilet using the excreta treating material needs no separate urine absorbent member and gives off no bad odor.

**Claims**

1.   A pet excreta treating material comprising a ground material of plant origin and inorganic powder and being adapted to self-disintegrate upon water absorption.

2.   The pet excreta treating material according to claim 1, wherein the inorganic powder is zeolite.

3.   The pet excreta treating material according to claim 1 or 2, which is for use in a pet toilet system comprising a toilet box, a drainboard partitioning the toilet box into upper lower compartments, the lower compartment having a tray, the pet excreta treating being configured to be placed in the upper compartment.

4.   A pet toilet system comprising a toilet box, a drainboard partitioning the toilet box into upper lower compartments, an excreta treating material being put on the upper compartment, and a tray being put in the lower compartment, the excreta treating material comprising the excreta treating material according to claim 1 or 2.

[Fig 1]

(b)

A

4

30

24

S

1

(a)

2

A

4

32 33 21

23

35

34

22

20

24

3

S

30

5

[Fig 2]

(a)

(b)

2

3

5

1

3

2

5

1

| INTERNATIONAL SEARCH REPORT | International application No. |
|---|---|
| | PCT/JP2006/325582 |

A. CLASSIFICATION OF SUBJECT MATTER
*A01K1/015(2006.01)i*

According to International Patent Classification (IPC) or to both national classification and IPC

B. FIELDS SEARCHED

Minimum documentation searched (classification system followed by classification symbols)
A01K1/015

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 61-74527 A (Taro OZAWA), | 1-2 |
| Y | 16 April, 1986 (16.04.86), Full text; all drawings (Family: none) | 3-4 |
| Y | JP 2003-180182 A (Kao Corp.), 02 July, 2003 (02.07.03), Full text; all drawings & US 2003/0116095 A1 & EP 1321030 A2 | 3-4 |
| A | JP 9-308403 A (Kumiko WATABE), 02 December, 1997 (02.12.97), Full text; all drawings (Family: none) | 1-4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 March, 2007 (27.03.07) | 10 April, 2007 (10.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/325582

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-95410 A  (Tachikawa Heiwa Nouen Co., Ltd.), <br> 10 April, 2001 (10.04.01), <br> Full text <br> (Family: none) | 1-4 |
| E,A | JP 2006-345830 A  (Kao Corp.), <br> 28 December, 2006 (28.12.06), <br> Full text; all drawings <br> (Family: none) | 1-4 |

Form PCT/ISA/210 (continuation of second sheet) (April 2005)

**EP 1 967 063 A1**

**REFERENCES CITED IN THE DESCRIPTION**

**Patent documents cited in the description**

- JP 7067489 A
- US 20030116095 A1
- US 6578520 B2
- JP 9308403 A